# EUROPÄISCHE PATENTSCHRIFT

(11) **EP 4 168 885 B1**
(45) Veröffentlichungstag und Bekanntmachung des Hinweises auf die Patenterteilung: **26.06.2024**
(21) Anmeldenummer: 22720444.3
(22) Anmeldetag: 04.04.2022
(51) Int. Cl.: G06F 3/01

(54) **FEEDBACKVORRICHTUNG FÜR EIN HAPTISCHES FEEDBACK AN EINEM BILDSCHIRM IN EINEM GERÄT, EIN GERÄT UND EIN KRAFTFAHRZEUG**
FEEDBACK DEVICE FOR HAPTIC FEEDBACK ON A SCREEN IN A DEVICE, DEVICE AND MOTOR VEHICLE
DISPOSITIF DE RÉTROACTION POUR RÉTROACTION HAPTIQUE SUR UN ÉCRAN DANS UN DISPOSITIF, DISPOSITIF ET VÉHICULE À MOTEUR

(30) Priorität: 12.04.2021 DE 102021108984
(43) Veröffentlichungstag der Anmeldung: 26.04.2023
(73) Patentinhaber: Audi AG, 85045 Ingolstadt (DE)
(72) Erfinder: MÜLLER, Ulrich, 85055 Ingolstadt (DE); SPAHMANN, Andreas, 74206 Bad Wimpfen (DE)
(74) Vertreter: Hofstetter, Schurack & Partner
(86) Internationale Anmeldenummer: PCT/EP2022/058882
(87) Internationale Veröffentlichungsnummer: WO 2022/218740

(56) Entgegenhaltungen:
- DE-A1-102013 006 414
- DE-A1-102018 215 717
- DE-B3-102015 010 355
- DE-B3-102018 222 088
- DE-B3-102019 201 901
- US-A1- 2010 182 263
- US-A1- 2010 194 546
- US-A1- 2011 276 878
- US-A1- 2019 391 652

## Beschreibung

Die Erfindung betrifft eine Feedbackvorrichtung für ein haptisches Feedback an einem Bildschirm oder einer bedienbaren Oberfläche in einem Gerät, welches ein Gehäuse, zumindest ein Rückstellelement, zumindest einen Bildschirm, zumindest eine Ausgleichsmasse und zumindest einen Aktuator umfasst. Das haptische Feedback soll kein Dröhnen im Gehäuse verursachen. Die Erfindung betrifft außerdem ein Gerät umfassend besagte Feedbackvorrichtung und ein Kraftfahrzeug.

Zur Unterstützung der Bedienung von Bildschirmen, insbesondere Touchscreens beziehungsweise Touchpads oder einer anderen bedienbaren Oberfläche wie z.B. einer Schalterleiste, wird häufig ein haptisches Feedback, insbesondere ein Force-Feedback oder eine Vibration oder ein Puls, eingesetzt. Der Benutzer bekommt dadurch eine haptische Rückmeldung bei der Bedienung. Bei der Berührung beziehungsweise bei der Betätigung vibriert der Bildschirm beziehungsweise wird mechanisch beschleunigt (mechanischer Impuls), um eine haptische Rückmeldung zu erzielen. Dieser mechanische Impuls wird von einem Aktuator erzeugt. Der Aktuator kann zum Beispiel ein Elektromagnet, ein Piezo, ein Elektropolymer oder Ähnliches sein. In einem Kraftfahrzeug ist in der Regel der Aktuator fahrzeugseitig befestigt und wirkt auf den Bildschirm, insbesondere das Display, das Touchpad oder ein Schaltelement.

Beim Abgeben des Impulses stößt der fahrzeugseitig befestigte Aktuator den Bildschirm an. Dadurch entsteht eine Bewegung des Bildschirms. Aufgrund des Gesetzes "Actio gleich Reactio" stößt sich der Aktuator dabei aber auch am Fahrzeug ab. Damit wir erstens der gewünschte Impuls am Bildschirm erzeugt, aber zweitens auch ein unerwünschter Impuls über das Gehäuse in das Fahrzeug eingeleitet. Dieser Impuls führt zu einem Körperschalleintrag und einer unerwünschten Schwingung im Kraftfahrzeug. Diese Vibration kann zum Beispiel im Gangwahlhebel, der Armauflage oder dem Lenkrad negativ wahrgenommen werden. Insbesondere entsteht ferner ein Wummern im Cockpit des Kraftfahrzeugs, welches für Fahrzeuginsassen unangenehm sein kann.

Es sind bereits verschiedene Lösungen zur Reduzierung des Körperschalleintrags in das Kraftfahrzeug bekannt. So ist aus der WO 2017/162586 A1 eine Bedien- und Anzeigeeinheit mit einem Aktuator zur Erzeugung einer haptischen Rückmeldung für insbesondere eine Fahrzeugkomponente bekannt. Zur Reduzierung von parasitären Geräuschen beziehungsweise Vibrationen ist der Aktuator mit einer elastisch gelagerten Ausgleichsmasse verbunden, sodass eine Massenträgheit der Ausgleichsmasse den Körpereintrag mittels einer an der Ausgleichsmasse verbundenen Feder dämpft. Nachteilig ist bei dieser Lösung, dass zur Impulseintragsvermeidung nur die Massenträgheit der Ausgleichsmasse angewendet wird.

Aus der DE 10 2018 108 040 A1 ist ein berührungsempfindliches Ein- und Ausgabegerät mit einem Aktuator zur Erzeugung einer haptischen Rückmeldung bekannt, bei welchem der Aktuator mit einem elastisch gelagerten Tilgerkörper zur Minimierung von störenden Körperschallabstrahlungen in das Kraftfahrzeug verbunden ist. Auch bei diesem Patent wird nur die Massenträgheit zur Impulseintragsvermeidung angewendet.

Aus der DE 10 2018 222 088 B3 ist ein Tastschalter in Verbindung mit einem Anzeigeelement für ein Kraftfahrzeug bekannt, bei welchem der Tastschalter ein zur haptischen Rückmeldung dienendes zentrales Schaltelement aufweist, das mit zwei drehbeweglich gelagerten Hebelelementen verbunden ist. Nachteilig bei der bekannten Lösung ist, dass das jeweilige Tastelement keine Aktuatorik zur Reduzierung eines störenden Körperschalleintrags aufweist.

Aus der US2019 391652 ist eine Ausgleichsmasse bekannt, die beweglich in oder an einem Gehäuse gelagert ist. Die Ausgleichsmasse ist bewegbar zur Kompensation oder Dämpfung von Kräften, die infolge der durch einen Aktuator erfolgenden Bewegung eines Bedienelements auf das Gehäuse wirken.

Der Erfindung liegt die Aufgabe zugrunde, in einem Gerät und/oder in einem Kraftfahrzeug eine Feedbackvorrichtung für ein haptisches Feedback bereitzustellen, die einen Körperschalleintrag bei einer haptischen Rückmeldung reduziert.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Durch die Erfindung ist eine Feedbackvorrichtung für ein haptisches Feedback an einem Bildschirm in einem Gerät bereitgestellt, welches ein Gehäuse, zumindest ein Rückstellelement, zumindest einen Bildschirm, zumindest eine Ausgleichsmasse und zumindest einen Aktuator umfasst. Der zumindest eine Aktuator ist dazu eingerichtet, einen Impuls zu erzeugen und den Impuls auf den zumindest einen Bildschirm zu übertragen, um ein haptisches Feedback zu einer Benutzereingabe am Bildschirm zu erzeugen, wobei der zumindest eine Aktuator zum Abgeben des Impulses auf der zumindest einen Ausgleichsmasse abgestützt ist, um einen zum Impuls korrespondierenden Gegenimpuls auf die zumindest eine Ausgleichsmasse zu übertragen. Der zumindest eine Aktuator kann auf einer oder mehreren drehbar gelagerten Ausgleichsmassen abgestützt sein, insbesondere beispielsweise mittels eines Gleit- oder Wälzlagers, das mit dem zumindest einen Aktuator und/oder der zumindest einen Ausgleichsmasse mechanisch fest verbunden ist.

Die Erfindung ist dadurch gekennzeichnet, dass die zumindest eine Ausgleichsmasse in dem Gehäuse drehbar gelagert und dazu eingerichtet ist, den Gegenimpuls des Aktuators in einen Drehimpuls zu überführen und den Drehimpuls mittels eines Trägheitsmoments der zumindest einen Ausgleichsmasse aufzunehmen, sodass mittels des jeweiligen Trägheitsmoments der zumindest einen Ausgleichsmasse ein Eintrag des Impulses von dem zumindest einen Aktuator in das Gehäuse gedämpft wird. Die Ausgleichsmasse kann beispielsweise eine Walze sein, die sich zur Überführung des Gegenimpulses des zumindest einen Aktuators in einen Drehimpuls um ihre Rotationsachse drehen kann. Die Walze kann zumindest ein Schaufelrad zum Abstützen des zumindest einen Aktuators und/oder als Befestigungsstelle für ein Rückstellelement, insbesondere zumindest eine Feder oder eine Torsionsfeder, aufweisen. Alternativ kann der Aktuator mittels einer Einkerbung in eine Mantelfläche der Ausgleichsmasse oder an einem Schaufelrad orthogonal zur Mantelfläche abgestützt sein. Alternativ kann die Ausgleichsmasse auch quaderförmig ausgebildet sein. Die Dämpfung des Gegenimpulses erfolgt dabei über das Trägheitsmoment der jeweiligen Ausgleichsmasse, indem die Energie des Gegenimpulses über die gestreckt weitergleitet und/oder über Reibung abgebaut wird.

Hierdurch ergibt sich der Vorteil, dass eine Vibration des Fahrzeugs, das heißt ein Körperschalleintrag, reduziert beziehungsweise verhindert werden kann. So kann ein Körperschalleintrag durch den Impuls des zumindest einen Aktuators für ein haptisches Feedback an einem in einer Mittelkonsole eines Fahrzeugcockpits angebrachten Bildschirm verhindert werden. Ein Klopfgeräusch oder ein Wummern im Fahrzeuginnenraum kann somit vermieden werden. Weiterhin ergibt sich jedoch der Vorteil, dass eine Anzahl von Nachschwingungen der Feedbackvorrichtung im Gerät oder im Kraftfahrzeug nach dem Auslösen des haptischen Feedbacks durch den Aktuator reduziert werden kann.

Zu der Erfindung gehören auch Ausführungsformen, durch die sich zusätzliche Vorteile ergeben.

Eine Ausführungsform sieht vor, dass der zumindest eine Aktuator auf zumindest zwei Ausgleichsmassen abgestützt ist, die derart in dem Gehäuse angeordnet sind, insbesondere mit zueinander parallel oder schräg angeordneten Rotationsachsen, dass die zumindest zwei Ausgleichsmassen eine zueinander gegenläufige Rotationsrichtung aufweisen. Mit anderen Worten, die zumindest zwei Ausgleichsmassen sind derart in dem Gehäuse angeordnet, dass sie sich um ihre Rotationsachsen in einem gegenläufigen Uhrzeigersinn drehen können. Hierdurch ergibt sich der Vorteil, dass ein Körperschalleintrag in das Kraftfahrzeug durch den Gegenimpuls des Aktuators noch mehr reduziert werden kann als mit einer Ausgleichsmasse alleine. Durch die Gegenläufigkeit der Drehbewegung der jeweiligen Ausgleichsmassen um ihre Rotationsachsen kann der Gegenimpuls noch zusätzlich gedämpft werden.

Eine Ausführungsform sieht vor, dass das zumindest eine Rückstellelement dazu eingerichtet ist, die zumindest eine Ausgleichsmasse und/oder den Bildschirm in eine Ruhelage zurückzuführen und dort zu halten, wobei das Rückstellelement insbesondere zumindest eine Feder oder eine Torsionsfeder oder ein Elastomer oder einen Magneten umfasst. Mit anderen Worten, das System wird durch das zumindest eine Rückstellelement in geeigneter Weise in der Ruhelage, daher der 0-Lage, gehalten, beziehungsweise in diese zurückgelenkt. Der Bildschirm und die zumindest eine Ausgleichsmasse werden aber durch den Aktuator ausgelegt, wobei als Aktuator alle Aktuator-Prinzipien zum Einsatz kommen können, zum Beispiel ein Elektromagnet, Piezo, Elektropolymer, Elektrostatik oder ein Memory-Metall. Das Rückstellelement kann beispielsweise ebenfalls einen Magneten umfassen, wobei ein Pol eines Magneten an dem Gehäuse befestigt ist und ein anderer, abstoßender Pol des Magneten an der zumindest einen Ausgleichsmasse, sodass sich bei einer Rotation der zumindest einen Ausgleichsmasse die beiden gleichen Pole gegenseitig abstoßen und somit eine Federwirkung erzielen. Die Ruhelage kann dabei jede Lage beschreiben, die die Feedbackvorrichtung ohne ein Einwirken einer Eingabekraft durch einen Benutzer aufweist.

Eine Ausführungsform sieht vor, dass eine Eingabekraft auf den zumindest einen Bildschirm dahingehend bestimmt wird, dass mittels eines Kraftmesssensors eine Zugkraft auf das zumindest eine Rückstellelement
gemessen wird. Mit anderen Worten, bei Einwirken einer Eingabekraft auf den Bildschirm, beispielsweise durch ein Drücken einer Fingers eines Benutzers, kann der Bildschirm eine Auslenkung erfahren, wobei der Bildschirm seine Auslenkung aus der Ruhelage auf die zumindest eine Ausgleichsmasse überträgt und diese um einen Drehwinkel um ihre jeweilige Rotationsachse dreht. Dabei kann ein Zug auf das Rückstellelement, insbesondere zumindest eine Feder und/oder Torsionsfeder wirken, der mit dem zumindest einen Kraftmesssensor gemessen werden kann. Von einer Steuereinheit kann die Eingabekraft mittels der vom zumindest einen Kraftmesssensor gemessenen Kraft bestimmt werden. Mittels der Messung der Eingabekraft kann ein Schwellenwert bestimmt werden, ab dem der zumindest eine Aktuator einen Impuls zum Erzeugen eines haptischen Feedbacks auslöst oder unterschiedliche Impulsmuster für zumindest ein haptisches Feedback für mehrere Eingabekräfte. Hierdurch ergibt sich der Vorteil, dass zumindest ein Schwellenwert definiert werden kann, ab welchem zumindest ein haptisches Feedback erzeugt wird.

Die Eingabekraft kann auch auf andere Weise gemessen werden. Hierzu sieht eine Ausführungsform vor, dass eine Auslenkung des zumindest einen Bildschirms mittels einer Messung eines Drehwinkels der zumindest einen Ausgleichsmasse bezüglich der Ruhelage, insbesondere mittels eines Dehnmessstreifens und/oder eines Drehratensensors, der zumindest einen Ausgleichsmassebestimmt wird. Mit anderen Worten, über die Drehung der zumindest einen Ausgleichsmasse um die jeweilige Rotationsachse kann auf die Auslenkung des Bildschirms rückgeschlossen werden, indem die besagte Drehung der zumindest einen Ausgleichsmasse um die Rotationsachse gemessen wird. Dies kann beispielsweise mittels eines Dehnmessstreifens oder der Messung einer Spannung zumindest einer Torsionsfeder an der Ausgleichsmasse erfolgen. Alternativ kann die Messung der Rotation der zumindest einen Ausgleichsmasse um die Rotationsachse mittels einer Messung eines elektrischen Drehwiderstands erfolgen. Hierdurch ergibt sich der Vorteil, dass zumindest ein haptisches Feedback für unterschiedliche Auslenkgrade des Bildschirms realisiert werden kann

Ebenfalls kann ausgehend von der Auslenkung des Bildschirms auf die Eingabekraft des Benutzers rückgeschlossen werden. So sieht eine Ausführungsform vor, dass die Eingabekraft eines Benutzers auf den zumindest einen Bildschirm mittels der Messung eines Drehwinkels der zumindest einen Ausgleichsmasse bestimmt wird. Mit anderen Worten, aus einer Relation der Auslenkung des Bildschirms oder des Drehwinkels der zumindest einen Ausgleichsmasse kann auf eine Eingabekraft rückgeschlossen werden, beispielsweise anhand einer Messung des Kraftschwellenwertes, der an dem Rückstellelement angebracht ist. Aufgrund der Spannung durch das Rückstellelement in dem System kann somit eine Relation zwischen der Eingabekraft und des Drehwinkels der zumindest einen Ausgleichsmasse gebildet werden. Hierdurch ergibt sich der Vorteil, dass eine redundante Messung der Eingabekraft sowie eine Plausibilitätsüberprüfung mit der gemessenen Eingabekraft vorgenommen werden kann.

Ebenfalls besteht die Möglichkeit, dass mittels des Drehwinkels der zumindest einen Ausgleichsmasse auf einen Bereich auf dem Bildschirm geschlossen werden kann, in dem der Benutzer eine Eingabe tätigt. So sieht eine Ausführungsform vor, dass aus einem Betrag und/oder einer Differenz von zumindest zwei Drehwinkeln von zumindest zwei Ausgleichsmassen ein Kippwinkel des zumindest einen Bildschirms bestimmt wird, insbesondere ein Bereich auf dem zumindest einen Bildschirm, auf welchem die Eingabekraft wirkt. Mit anderen Worten, bei einer nicht mittig auf den Bildschirm einwirkenden Eingabekraft kann die zur Eingabekraft nächstliegende Ausgleichsmasse einen größeren Drehwinkel aufweisen als die zur Eingabekraft entferntere Ausgleichsmasse. Wenn die zwei Ausgleichsmassen beispielsweise auf einer linken und auf einer rechten Seite des Bildschirms in dem Gerät angebracht sind, kann aus der Differenz der Drehwinkel der jeweiligen Ausgleichsmassen ein Kippwinkel des Bildschirms bestimmt werden. Hierdurch ergibt sich der Vorteil, dass ein Anzeigeinhalt des Bildschirms für einen visuellen Effekt an den Kippwinkel angepasst wird. Weiterhin ergibt sich dadurch der Vorteil, dass der Schwellenwert für die Eingabekraft, ab welcher das haptische Feedback durch den Aktuator ausgelöst werden soll, für den jeweiligen Bereich des Bildschirms bestimmt werden kann.

Eine Ausführungsform sieht vor, dass eine Steuereinheit den Aktuator dazu veranlasst, zumindest einen Impuls für ein haptisches Feedback zu erzeugen, wenn die Eingabekraft einen Kraftschwellenwert oder der zumindest eine Drehwinkel der zumindest einen Ausgleichsmasse einen Drehwinkelschwellenwert überschreitet. Hierdurch ergibt sich der Vorteil, dass beispielsweise auf einem Touchscreen einem Benutzer eine Force-Feedback-Funktion bereitgestellt werden kann.

Nach einer Auslenkung des Bildschirms durch den zumindest einen Aktuator kann ein unerwünschtes Nachschwingen entstehen, das reduziert werden soll. So sieht eine Ausführungsform vor, dass die Steuereinheit dazu eingerichtet ist, den zumindest einen Aktuator derart anzusteuern, dass der zumindest eine Aktuator einen Bremsimpuls, der gegen einen Rückstellimpuls der zumindest einen Ausgleichsmasse und/oder des zumindest einen Bildschirms nach einer Auslenkung aus der Ruhelage gerichtet ist, dann erzeugt, wenn nach der Auslenkung aus der Ruhelage die zumindest eine Ausgleichsmasse und/oder der zumindest eine Bildschirm ihre jeweilige Ausgangslage wieder erreicht haben, sodass ein Nachschwingen der zumindest einen Ausgleichsmasse gedämpft wird. Hierzu kann der zumindest eine Aktuator dazu eingerichtet sein, einen Impuls in Richtung des Bildschirm und in eine dazu entgegensetzte Richtung abzugeben. Mit anderen Worten, bei der Abgabe des Impulses für das haptische Feedback wird die zumindest eine Ausgleichsmasse aus ihrer Ruhelage ausgelenkt. Durch das Rückstellelement kann die zumindest eine Ausgleichsmasse wieder in ihre Ruhelage zurückgezogen werden. Kurz vor dem Erreichen der Ruhelage kann der Aktuator einen Bremsimpuls erzeugen, der gegen einer Rückbewegung der zumindest einen Ausgleichsmasse gerichtet ist. Beispielsweise kann die Steuereinheit den Bremsimpuls dann veranlassen, sobald der Drehwinkel der zumindest einen Ausgleichsmasse nach dem Auslösen des Impulses in dem Aktuator einen Wert von 0 Grad erreicht, also wenn die Ausgleichsmasse genau dann wieder in ihrer Ruhelage ist. Hierdurch ergibt sich der Vorteil, dass ein Nachschwingen gedämpft werden kann.

Ebenfalls kann eine Nachschwingungen mittels einer entsprechenden Lagerung der zumindest einen Ausgleichsmasse in dem Gehäuse gedämpft werden. Hierzu sieht eine Ausführungsform vor, dass die Lagerung der zumindest einen Ausgleichsmasse dazu eingerichtet ist, mittels eines Reibelements den Drehimpuls der zumindest einen Ausgleichsmasse, insbesondere den Drehimpuls bei einer Rückschwingbewegung, zu dämpfen. Beispielsweise kann das Reibelement ein Gummistreifen sein, der dazu eingerichtet ist, auf einer Mantelfläche der zumindest einen Ausgleichsmasse zu reiben und somit die Rückschwingbewegung zu dämpfen. Ergänzend oder alternativ kann auch das Lager der zumindest einen Ausgleichsmasse, welches beispielsweise ein Kugellager oder ein Gleitlager sein kann, mittels einer lagerinternen Reibung den Drehimpuls dämpfen. Hierdurch ergibt sich der Vorteil, dass Nachschwingungen der Feedbackvorrichtung nach einem haptischen Feedback gedämpft werden können.

Eine Ausführungsform sieht ein Gerät umfassend die oben beschriebene Feedbackvorrichtung vor.

Eine Ausführungsform sieht ebenfalls ein Kraftfahrzeug vor, welches die besagte Feedbackvorrichtung oder das besagte Gerät umfasst. Beispielsweise kann das Kraftfahrzeug einen Bildschirm in der Mittelkonsole im Innenraum aufweisen, der mit einer Force-Feedback-Funktion für ein haptisches Feedback ausgestattet ist. Durch die besagte Feedbackvorrichtung kann somit ein Impulseintrag in das Kraftfahrzeugcockpit und damit auch ein Wummergeräusch durch den Körperschalleintrag reduziert werden. Ergänzend und alternativ kann das Kraftfahrzeug auch das Gerät umfassen, welches die besagte Feedbackvorrichtung umfasst.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Zu der Erfindung gehört auch die Steuervorrichtung für die Feedbackvorrichtung und/oder für das Gerät und/oder für das Kraftfahrzeug. Die Steuereinheit kann eine Datenverarbeitungsvorrichtung oder eine Prozessoreinrichtung aufweisen, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung einen Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Im Folgenden sind Ausführungsbeispiele der Erfindung beschrieben. Hierzu zeigt:
- Fig. 1: einen ersten Aspekt der Feedbackvorrichtung mit einer Ausgleichsmasse;
- Fig. 2: einen zweiten Aspekt der Feedbackvorrichtung mit zwei Ausgleichsmassen; und
- Fig. 3: einen dritten Aspekt der Feedbackvorrichtung mit zwei Ausgleichsmassen und einem Verteilelement des Aktuators.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

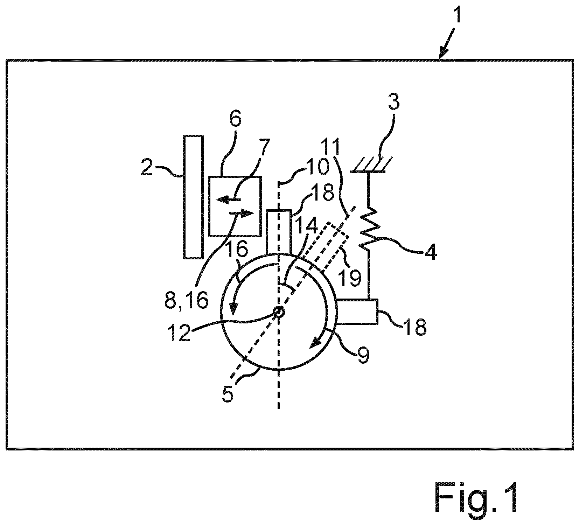

Fig. 1 zeigt die Feedbackvorrichtung 1 mit einem Bildschirm 2, einem Aktuator 6, einer Ausgleichsmasse 5 und einem Rückstellelement 4, das an einem Gehäuse 3 eines Geräts oder einer Kraftfahrzeugkomponente befestigt ist. Das Rückstellelement 4 ist hierbei als Feder ausgebildet und an einer Aufhängung 18 an der Ausgleichsmasse 5 befestigt. Der Bildschirm 2 ist dabei dazu eingerichtet, eine horizontale Translationsbewegung in Richtung des Impulses 7 durchzuführen, wobei der Bildschirm 2 mittels eines in Fig. 1 nicht gezeigten Rückstellelements in der Ruhelage 10 gehalten wird. Die Ausgleichsmasse 5 kann beispielsweise als eine Walze ausgebildet sein, die sich um die Rotationsachse 12 drehen kann. Der Aktuator 6 ist dabei auf der Aufhängung 18 auf der Ausgleichsmasse 5 abgestützt, indem der Aktuator 6 vorzugsweise mit der Aufhängung 18 mechanisch fest verbunden ist. Zwischen dem Bildschirm 2 und dem Aktuator 6 ist ein Luftspalt vorgesehen, der eine Bewegungstoleranz für eine Bildschirmbewegung zum Übermitteln des haptischen Feedbacks bereitstellt.

Durch das Rückstellelement 4, beispielsweise eine Feder, werden die Ausgleichsmasse 5 und der Bildschirm 2 in einer Ruhelage 10 gehalten. Eine Benutzereingabe kann dabei derart aussehen, dass der Benutzer den Bildschirm 2 mit dem Finger berührt oder den Finger mit einer Eingabekraft 21 auf den Bildschirm 2 drückt, sodass der Bildschirm 2 aus der Ruhelage 10 ausgelenkt wird. Bei einer Berührung oder bei Überschreiten eines Schwellenwerts der Eingabekraft 21 kann der Aktuator 6 einen Impuls oder zumindest ein Impulsmuster auf den Bildschirm 2 zum Erzeugen zumindest eines haptischen Feedbacks auf die Benutzereingabe ausgeben. Gemäß dem Prinzips "Actio = Reactio" gibt der Aktuator 6 den Impuls 7 an den Bildschirm ab und erzeugt dabei gleichzeitig einen Gegenimpuls 8, der dem Betrag des Impulses 7 entspricht, aber diesem entgegengerichtet ist. Der Gegenimpuls 8 wirkt gegen die Aufhängung 18 der Ausgleichsmasse 5 und versetzt diese in Rotation um die Rotationsachse 12. Dabei wird der Gegenimpuls 8 in den Drehimpuls 9 umgewandelt, sodass die Ausgleichsmasse 5 um die Rotationsachse 12 der Richtung des Drehimpulses 9 dreht. Hierbei wird die Ausgleichsmasse 5 aus der Ruhelage 10 je nach Betrag des Gegenimpulses 8 in die Auslenkung 11 ausgelenkt. Durch die Auslenkung 11 wird das Rückstellelement 4, also die Feder, angezogen, wobei das Rückstellelement 4 die Ausgleichsmasse 5 nach der Auslenkung 11 wieder in die Ruhelage 10 zurückbewegt.

Wenn der Aktuator 6 bei einem Überschreiten der Eingabekraft 21 über einen Kraftschwellenwert ausgelöst wird, so kann durch die Eingabekraft 21 der Bildschirm gegen die Aufhängung 18 der Ausgleichsmasse 5 gedrückt werden, sodass sich die Ausgleichsmasse 5 um die Rotationsachse 12 dreht. Zwischen der Ruhelage 10 und der Auslenkung 11 der Ausgleichsmasse 5 kann von einer Steuereinheit, die nicht gezeigt ist, ein Drehwinkel 14 bestimmt werden, wodurch die auf den Bildschirm 2 einwirkende Eingabekraft 21 bestimmt wird. Wenn der Drehwinkel 14 einen Schwellenwert überschreitet, das heißt wenn die Eingabekraft 21 einen Schwellenwert überschreitet, kann der Aktuator 6 vorzugsweise den Impuls 7 für das Bereitstellen des haptischen Feedbacks auslösen. Wenn nach der Auslenkung 11 die Ausgleichsmasse 5 wieder in die Ruhelage 10 zurück dreht, kann bei Erreichen der Ausgleichsmasse 5 in der Ruhelage 10 der Aktuator 6 wiederum einen Rückstellimpuls 17, welcher in der gleichen Richtung wie der Gegenimpuls 8 gerichtet ist, auf die Aufhängung 18 der Ausgleichsmasse 5 wirken, sodass ein Nachschwingen der Ausgleichsmasse 5 über die Ruhelage 10 hinaus gedämpft wird.

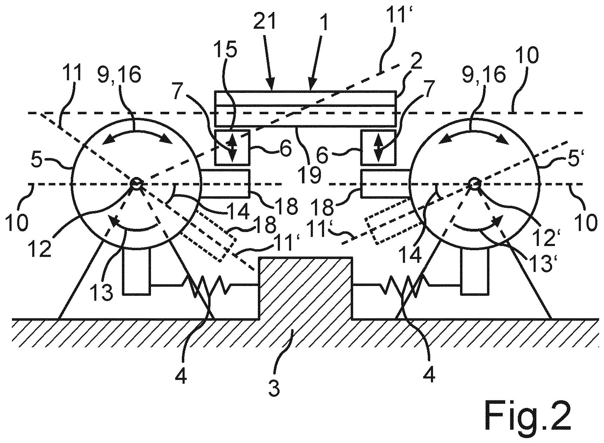

Fig. 2 zeigt einen zweiten Aspekt der Erfindung mit zwei Ausgleichsmassen 5 und 5'. Die Ausgleichsmassen 5 und 5' sind dabei mittels eines Rückstellelements 4 jeweils an dem Gehäuse 3 befestigt. Der Bildschirm 2 wird dabei von zwei Aktuatoren 6 mit einem Impuls 7 zum Bereitstellen eines haptischen Feedbacks beaufschlagt. Die zwei Aktuatoren 6 sind jeweils auf der Aufhängung 18 der zwei Ausgleichsmassen 5 und 5' mittels einer mechanischen Aufhängung abgestützt. Durch die Rückstellelemente 4 werden der Bildschirm 2 und die zwei Ausgleichsmassen 5 und 5' in der Ruhelage 10 gehalten. Die Ausgleichsmasse 5' auf der rechten Seite dreht sich um die Rotationsachse 12' bei einem Auslenken des Bildschirms 2 in Richtung des Gegenimpulses 8 durch die Eingabekraft 21, wobei die Ausgleichsmassen 5 und 5' sich um ihre jeweiligen Rotationsachse 12 und 12' jeweils im und gegen den Uhrzeigersinn drehen. Die zwei Ausgleichsmassen 5 und 5' weisen somit eine gegenläufige Drehrichtung auf, wodurch der Gegenimpuls 8 der Aktuatoren 6 nochmals reduziert wird. Bei dem Erzeugen des Gegenimpulses 8 werden die Ausgleichsmassen 5 und 5' aus der Ruhelage 10 in die Auslenkung 11 ausgelenkt, wobei der Drehwinkel 14 die Stellungsdifferenz der Ausgleichsmassen 5 und 5' zwischen der Auslenkung 11 und der Ruhelage 10 beschreibt. Je nachdem, ob der Drehwinkel 14 der Ausgleichsmasse 5 auf der linken Seite oder der Drehwinkel 14' auf der Ausgleichsmasse 5' auf der rechten Seite in Fig. 2 größer ist, kann von einer nicht gezeigten Steuereinheit bestimmt, auf welcher Seite der jeweiligen Ausgleichsmasse 5 und 5' die Eingabekraft 21 größer ist.

Wenn sich die beiden Drehwinkel 14 und 14' der beiden Ausgleichsmassen 5 und 5' voneinander unterscheiden, so kippt sich der Bildschirm 2 in der Auslenkung 11' bezüglich der Ruhelage 10. Zwischen der Auslenkung 11' des Bildschirms 2 und der Ruhelage 10 kann ebenfalls ein Kippwinkel 15 des Bildschirms 2 von der Steuereinheit bestimmt werden. Dabei kann von der Steuereinheit vorgesehen sein, dass der Aktuator 6 auf der jeweiligen Seite eine entsprechend dem jeweiligen Drehwinkel 14 abgestimmten Rückstellimpuls 17 abgibt, sodass ein unterschiedliches Nachschwingen auf beiden Seiten der jeweiligen Ausgleichsmassen 5 und 5' gedämpft wird. Mittels des Kippwinkels 15 kann auf einen Bereich auf dem Bildschirm 2 von der Steuereinheit geschlossen werden, in dem die Eingabekraft 21 auf den Bildschirm 2 einwirkt.

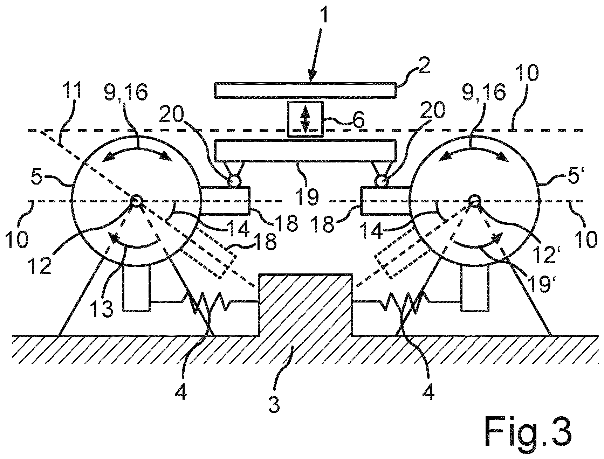

Fig. 3 zeigt den gleichen Inhalt wie Fig. 2 mit dem Unterschied, dass auf den Bildschirm 2 nur ein Aktuator 6 einwirkt, wobei der Aktuator 6 den Gegenimpuls mittels eines Verteilelements 19 auf die beiden Ausgleichsmassen 5 und 5' verteilt. Das Verteilelement 19 kann dabei auf die Aufhängungen 18 der jeweiligen Ausgleichsmassen 5 und 5' mittels eines Lagers 20 abgestützt sein. Das Lager 20 kann dabei beispielsweise als ein Wälzlager ausgelegt sein, die fest mit dem Verteilelement 19 mechanisch verbunden ist, sodass bei einer Auslenkung des Verteilelements 19 das Verteilelement 19 auf den Aufhängungen 18 der Ausgleichsmassen 5 und 5' abrollen kann. Durch die besagte Anordnung kann ein Kippen des Bildschirms 2 vermieden werden und durch die jeweiligen gegenläufigen Rotationsrichtungen 13 und 13' der beiden Ausgleichsmassen 5 und 5' ein damit ein Körperschalleintrag auf das Gehäuse 3 mittels der gegenläufigen Rotationsrichtungen 13 und 13' der Ausgleichsmassen 5 und 5' bezüglich ihrer Rotationsachsen 12 und 12' reduziert werden.

Um den Impulseintrag in das Fahrzeug zu minimieren, stößt sich der Aktuator von zwei gegenläufigen rotatorischen Massen ab. Damit wird das Massenträgheitsmoment und nicht die reine Massenträgheit als Gegenlage genutzt. Dadurch wird der Impulseintrag in das Fahrzeug deutlich verringert. Durch zwei gegenläufige Rotationsrichtungen wir der Impulseintrag nochmals reduziert. Beide rotatorisch aufgehängten Massen haben die gleiche Ausrichtung, rotieren aber bei der Impulserzeugung in entgegengesetzter Richtung.

Eine oder mehrere Aktuatoren stützen sich an einen oder mehreren drehbar gelagerten Massen ab. Der Impuls der Aktuatoren wird so eingeleitet, dass die Massen sich (minimal) drehen und ein Massenträgheitsmoment überwunden werden muss. Das System wird durch Federn in geeigneter Weise in der Nulllage gehalten, beziehungsweise in diese zurück gelenkt. Statt Federn können auch andere federnde Elemente, wie zum Beispiel Elastomere, Magnete, und/oder andere zum Einsatz kommen. Als Aktuatoren können alle Aktuator-Prinzipien zum Einsatz kommen (zum Beispiel Elektromagnet, Piezo, Elektropolymer, Elektrostatik, Memory-Metall). Vorteilhaft ist eine Auslegung mit einem Aktuator mit zwei Wirkrichtungen, um eine gezielte Dämpfung und Regelung wahrnehmen zu können.

Insgesamt zeigen die Beispiele, wie eine Feedbackvorrichtung in einem Gehäuse oder in einem Kraftfahrzeug bereitgestellt werden kann.

## Patentansprüche

1. Gerät umfassend eine Feedbackvorrichtung (1) für ein haptisches Feedback an einem Bildschirm (2) oder einer anderen bedienbaren Oberfläche in dem Gerät, umfassend ein Gehäuse (3), zumindest ein Rückstellelement (4), zumindest einen Bildschirm (2), zumindest eine Ausgleichsmasse (5, 5') und zumindest einen Aktuator (6), wobei der zumindest eine Aktuator (6) dazu eingerichtet ist, einen Impuls (7) zu erzeugen und den Impuls (7) auf den zumindest einen Bildschirm (2) zu übertragen, um ein haptisches Feedback zu einer Benutzereingabe zu erzeugen, wobei der zumindest eine Aktuator (6) zum Abgeben des Impulses (7) auf der zumindest einen Ausgleichsmasse (5, 5') abgestützt ist, um einen zum Impuls (7) korrespondierenden Gegenimpuls (8) auf die zumindest eine Ausgleichsmasse (5, 5') zu übertragen,
**dadurch gekennzeichnet, dass**
die zumindest eine Ausgleichsmasse (5, 5') in dem Gehäuse (3) drehbar gelagert und dazu eingerichtet ist, den Gegenimpuls (8) des Aktuators (6) in einen Drehimpuls (9) zu überführen und den Drehimpuls (9) mittels eines Trägheitsmoments der zumindest einen Ausgleichsmasse (5, 5') aufzunehmen, sodass mittels des jeweiligen Trägheitsmoments der zumindest einen Ausgleichsmasse (5, 5') ein Eintrag des Impulses (7) von dem zumindest einen Aktuator (6) in das Gehäuse (3) gedämpft wird.

2. Gerät nach Anspruch 1, wobei der zumindest eine Aktuator (6) auf zumindest zwei Ausgleichsmassen (5, 5') abgestützt ist, die derart in dem Gehäuse (3) angeordnet sind, insbesondere mit zueinander parallel oder schräg angeordneten Rotationsachsen (12, 12'), dass die zumindest zwei Ausgleichsmassen (5, 5') eine zueinander gegenläufige Rotationsrichtung (13, 13') aufweisen.

3. Gerät nach einem der vorhergehenden Ansprüche, wobei das zumindest eine Rückstellelement (4) dazu eingerichtet ist, die zumindest eine Ausgleichsmasse (5, 5') und/oder den Bildschirm (2) in eine Ruhelage (10) zurückzuführen und dort zu halten, wobei das Rückstellelement (4) insbesondere zumindest eine Feder oder eine Torsionsfeder oder ein Elastomer oder einen Magneten umfasst.

4. Gerät nach Anspruch 3, wobei eine Eingabekraft (21) auf den zumindest einen Bildschirm (2) dahingehend bestimmt wird, dass mittels eines Kraftmesssensors eine Zugkraft auf das zumindest eine Rückstellelement (4) gemessen wird.

5. Gerät nach einem der vorhergehenden Ansprüche, wobei eine Auslenkung (11, 11') des zumindest einen Bildschirms (2) mittels einer Messung eines Drehwinkels (14) der zumindest einen Ausgleichsmasse (5, 5') bezüglich der Ruhelage (10), insbesondere mittels eines Dehnmessstreifens und/oder eines Drehratensensors, der zumindest einen Ausgleichsmasse (5, 5') bestimmt wird.

6. Gerät nach Anspruch 5, wobei die Eingabekraft (21) eines Benutzers auf den zumindest einen Bildschirm (2) mittels der Messung eines Drehwinkels (14) der zumindest einen Ausgleichsmasse (5, 5') bestimmt wird.

7. Gerät nach Anspruch 5 oder 6, wobei aus einem Betrag und/oder einer Differenz von zumindest zwei Drehwinkeln (14) von zumindest zwei Ausgleichsmassen (5, 5') ein Kippwinkel (15) des zumindest einen Bildschirms (2) bestimmt wird, insbesondere ein Bereich auf dem zumindest einen Bildschirm (2), auf welchem die Eingabekraft (21) wirkt.

8. Gerät nach einem der Ansprüche 4 bis 7, wobei eine Steuereinheit den Aktuator (6) dazu veranlasst, zumindest einen Impuls (7) für ein haptisches Feedback zu erzeugen, wenn die Eingabekraft (21) einen Kraftschwellenwert oder der zumindest eine Drehwinkel (14) der zumindest einen Ausgleichsmasse (5, 5') einen Drehwinkelschwellenwert überschreitet.

9. Gerät nach einem der vorhergehenden Ansprüche, wobei die Steuereinheit dazu eingerichtet ist, den zumindest einen Aktuator (6) derart anzusteuern, dass der zumindest eine Aktuator (6) einen Bremsimpuls (16), der gegen einen Rückstellimpuls (17) der zumindest einen Ausgleichsmasse (5, 5') und/oder des zumindest einen Bildschirms (2) nach einer Auslenkung (11, 11') aus der Ruhelage (10) gerichtet ist, dann erzeugt, wenn nach der Auslenkung (11, 11') aus der Ruhelage (10) die zumindest eine Ausgleichsmasse (5, 5') und/oder der zumindest eine Bildschirm (2) ihre jeweilige Ausgangslage wieder erreicht haben, sodass ein Nachschwingen der zumindest einen Ausgleichsmasse (5, 5') gedämpft wird.

10. Gerät nach einem der vorhergehenden Ansprüche, wobei die Lagerung der zumindest einen Ausgleichsmasse (5, 5') dazu eingerichtet ist, mittels eines Reibelements den Drehimpuls (9) der zumindest einen Ausgleichsmasse (5, 5'), insbesondere den Drehimpuls (9) bei einer Rückschwingbewegung, zu dämpfen.

11. Kraftfahrzeug umfassend ein Gerät nach einem der Ansprüche 1 bis 10.

## Claims

1. An appliance comprising a feedback device (1) for a haptic feedback on a screen (2) or another operable surface in the appliance, comprising a housing (3), at least one return element (4), at least one screen (2), at least. one balancing mass (5, 5') and at least one actuator (6), wherein the at least one actuator (6) is configured to generate a momentum (7) and to transfer the momentum (7) to the at least one screen (2), to generate a haptic feedback to a user input, wherein the at least one actuator (6) is supported on the at least one balancing mass (5, 5') for outputting the momentum (7) to transfer a counter-momentum (8) corresponding to the momentum (7) to the at least one balancing mass (5, 5'), **characterized in that**
the at least one balancing mass (5, 5') is rotatably mounted in the housing (3) and configured to convert the counter-momentum (8) of the actuator (6) into an angular momentum (9) and to absorb the angular momentum (9) by means of a moment of inertia of the at least one balancing mass (5, 5'), such that an input of the momentum (7) from the at least one actuator (6) into the housing (3) is damped by means of the respective moment of inertia of the at least one balancing mass (5, 5').

2. The appliance according to claim 1, wherein the at least one actuator (6) is supported on at least two balancing masses (5, 5') , which are arranged in the housing (3), in particular with rotational axes (12, 12') arranged parallel or obliquely to each other, such that the at least two balancing masses (5, 5') have a rotational direction (13, 13') opposite to each other.

3. The appliance according to any one of the preceding claims, wherein the at least one return element (4) is configured to return the at least one balancing mass (5, 5') and/or the screen (2) into a rest position (10) and to retain them there, wherein the return element (4) in particular includes at least one spring or a torsion spring or an elastomer or a magnet.

4. The appliance according to claim 3, wherein an input force (21) on the at least one screen (2) is determined to the effect that a tensile force on the at least one return element (4) is measured by means of a force measuring sensor.

5. The appliance according to any one of the preceding claims, wherein a deflection (11, 11') of the at least one screen (2) is determined by means of a measurement of a rotational angle (14) of the at least one balancing mass (5, 5') with respect to the rest position (10), in particular by means of a strain gauge and/or a rotation rate sensor, of the at least one balancing mass (5, 5').

6. The appliance according to claim 5, wherein the input force (21) of a user on the at least one screen (2) is determined by means of the measurement of a rotational angle (14) of the at least one balancing mass (5, 5').

7. The appliance according to claim 5 or 6, wherein a tilt angle (15) of the at least one screen (2), in particular an area on the at least one screen (2), on which the input force (21) acts, is determined from a magnitude and/or a difference of at least two rotational angles (14) of at least two balancing masses (5, 5') .

8. The appliance according to any one of claims 4 to 7, wherein a control unit causes the actuator (6) to generate at least one momentum (7) for a haptic feedback if the input force (21) exceeds a force threshold value or the at least one rotational angle (14) of the at least one balancing mass (5, 5') exceeds a rotational angle threshold value.

9. The appliance according to any one of the preceding claims, wherein the control unit is configured to control the at least one actuator (6) such that the at least one actuator (6) generates a braking momentum (16), which is directed against a return momentum (17) of the at least one balancing mass (5, 5') and/or of the at least one screen (2) after a deflection (11, 11') from the rest position (10), if after the deflection (11, 11') from the rest position (10), the at least one balancing mass (5, 5') and/or the at least one screen (2) have again reached their respective initial position, such that a post-oscillation of the at least one balancing mass (5, 5') is damped.

10. The appliance according to any one of the preceding claims, wherein the mounting of the at least one balancing mass (5, 5') is configured to damp the angular momentum (9) of the at least one balancing mass (5, 5'), in particular the angular momentum (9) upon a back oscillation movement, by means of a friction element.

11. A motor vehicle comprising an appliance according to any one of claims 1 to 10.

## Revendications

1. Appareil comprenant un dispositif de rétroaction (1) pour une rétroaction haptique sur un écran (2) ou une autre surface pouvant être commandée dans l'appareil, comprenant un boîtier (3), au moins un élément de rappel (4), au moins un écran (2), au moins une masse d'équilibrage (5, 5') et au moins un actionneur (6), le au moins un actionneur (6) étant conçu pour générer une impulsion (7) et pour transférer l'impulsion (7) au au moins un écran (2) afin de générer une rétroaction haptique à une entrée d'utilisateur, le au moins un actionneur (6) destiné à délivrer l'impulsion (7) étant en appui sur la au moins une masse d'équilibrage (5, 5') afin de transmettre une contre-impulsion (8) correspondant à l'impulsion (7) à la au moins une masse d'équilibrage (5, 5'),
**caractérisé en ce que**
la au moins une masse d'équilibrage (5, 5') est montée de manière rotative dans le boîtier (3) et conçue pour transférer la contre-impulsion (8) de l'actionneur (6) dans une impulsion de rotation (9) et pour recevoir l'impulsion de rotation (9) au moyen d'un moment d'inertie de la au moins une masse d'équilibrage (5, 5'), de sorte qu'au moyen du moment d'inertie respectif de la au moins une masse d'équilibrage (5, 5'), une entrée de l'impulsion (7) est amortie par le au moins un actionneur (6) dans le boîtier (3).

2. Appareil selon la revendication 1, dans lequel le au moins un actionneur (6) est en appui sur au moins deux masses d'équilibrage (5, 5') qui sont agencées dans le boîtier (3), en particulier avec des axes de rotation (12, 12') agencés parallèlement l'un à l'autre ou obliquement l'un par rapport à l'autre, de telle sorte que les au moins deux masses d'équilibrage (5, 5') ont un sens de rotation (13, 13') opposé.

3. Appareil selon l'une des revendications précédentes, dans lequel le au moins un élément de rappel (4) est conçu pour ramener la au moins une masse d'équilibrage (5, 5') et/ou l'écran (2) dans une position de repos (10) et pour l'y maintenir, l'élément de rappel (4) comprenant en particulier au moins un ressort ou un ressort de torsion ou un élastomère ou un aimant.

4. Appareil selon la revendication 3, dans lequel une force d'entrée (21) est déterminée sur le au moins un écran (2) en mesurant une force de traction sur le au moins un élément de rappel (4) au moyen d'un capteur de mesure de force.

5. Appareil selon l'une des revendications précédentes, dans lequel une déviation (11, 11') du au moins un écran (2) est déterminée en mesurant un angle de rotation (14) de la au moins une masse d'équilibrage (5, 5') par rapport à la position de repos (10), en particulier au moyen d'un extensomètre et/ou d'un capteur de vitesse de rotation, de la au moins une masse d'équilibrage (5, 5').

6. Appareil selon la revendication 5, dans lequel la force d'entrée (21) d'un utilisateur sur le au moins un écran (2) est déterminée en mesurant un angle de rotation (14) de la au moins une masse d'équilibrage (5, 5').

7. Appareil selon la revendication 5 ou 6, dans lequel à partir d'une grandeur et/ou d'une différence d'au moins deux angles de rotation (14) d'au moins deux masses d'équilibrage (5, 5'), un angle d'inclinaison (15) du au moins un écran (2) est déterminé, en particulier une zone sur le au moins un écran (2), sur laquelle agit la force d'entrée (21).

8. Appareil selon l'une des revendications 4 à 7, dans lequel une unité de commande amène l'actionneur (6) à générer au moins une impulsion (7) pour une rétroaction haptique, lorsque la force d'entrée (21) dépasse une valeur de seuil de force ou lorsque le au moins un angle de rotation (14) de la au moins une masse d'équilibrage (5, 5') dépasse une valeur de seuil d'angle de rotation.

9. Appareil selon l'une des revendications précédentes, dans lequel l'unité de commande est conçue pour commander le au moins un actionneur (6) de telle sorte que le au moins un actionneur (6) génère une impulsion de freinage (16) dirigée contre une impulsion de rappel (17) de la au moins une masse d'équilibrage (5, 5') et/ou du au moins un écran (2) après une déviation (11, 11') à partir de la position de repos (10) lorsque, après la déviation (11, 11') à partir de la position de repos (10), la au moins une masse d'équilibrage (5, 5') et/ou le au moins un écran (2) ont de nouveau atteint leur position initiale respective, de sorte qu'une oscillation de la au moins une masse d'équilibrage (5, 5') est amortie.

10. Appareil selon l'une des revendications précédentes, dans lequel le palier de la au moins une masse d'équilibrage (5, 5') est conçu pour amortir l'impulsion de rotation (9) de la au moins une masse d'équilibrage (5, 5'), en particulier l'impulsion de rotation (9) lors d'un mouvement d'oscillation en arrière, au moyen d'un élément de friction.

11. Véhicule à moteur comprenant un appareil selon l'une des revendications 1 à 10.
